# EUROPÄISCHE PATENTANMELDUNG

(11) **EP 3 789 538 A1**
(43) Veröffentlichungstag der Anmeldung: **10.03.2021**
(21) Anmeldenummer: 20194205.9
(22) Anmeldetag: 02.09.2020
(51) Int. Cl.: D21H 19/84, B32B 7/06, B32B 7/12, B32B 27/10, D21H 27/10, D21H 27/30, D21H 27/32

(54) **RESUSPENDIERBARES PAPIERLAMINAT UND VERFAHREN ZU DESSEN HERSTELLUNG**

(30) Priorität: 03.09.2019 DE 102019123558
(71) Anmelder: Constantia Pirk GmbH & Co. KG, 92712 Pirk (DE)
(72) Erfinder: Kick, Markus, 92637 Weiden in der Oberpfalz (DE); Llorente, Maria de los Angeles, 48003 Bilbao (ES)
(74) Vertreter: Bittner, Bernhard

(57) **Zusammenfassung**

Die Patentanmeldung betrifft ein Papierlaminat, insbesondere Papierlaminat für Lebensmittelbehältnisse, mit einem Trägerpapier und einer an dem Trägerpapier zumindest einseitig mittelbar angeordneten ersten Beschichtung und einer an dem Trägerpapier auf der der ersten Beschichtung gegenüberliegenden Seite unmittelbar angeordneten zweiten Beschichtung, wobei die erste Beschichtung ausgewählt ist aus einer Gruppe, die Lack, Druckfarbe, Tinte, Fettsperre, Siegelschicht, Kleber, Leim, wasserlösliche Polymerfolie und Kunstharz, umfasst, und die zweite Beschichtung wasserlöslich und/oder wasserdegradierbar ist. Weiterhin betrifft die Erfindung eine Verpackung aus einem solchen Papierlaminat und ein Verfahren zu dessen Herstellung.

## Beschreibung

Die vorliegende Erfindung bezieht sich auf ein papierhaltiges Laminat, insbesondere papierhaltiges Laminat für Lebensmittelbehältnisse, mit einem Trägerpapier und einer an dem Trägerpapier zumindest einseitig mittelbar angeordneten ersten Beschichtung und einer an dem Trägerpapier auf der der ersten Beschichtung gegenüberliegenden Seite unmittelbar angeordneten zweiten Beschichtung. Weiterhin betrifft die Erfindung eine Verpackung, die ein solches papierhaltiges Laminat enthält und ein Verfahren zur Herstellung eines solchen Laminats beziehungsweise einer solchen Verpackung.

Aus dem Stand der Technik sind diverse verschiedene Verpackungslösungen bekannt. Von besonderer Bedeutung sind Verpackungen für Lebensmittel, da an die dafür verwendeten Verpackungsmaterialien besondere Anforderungen gestellt werden. Um die Anforderungen hinsichtlich der Hygiene, der Bedruckbarkeit und der Barriereeigenschaften für Kontaminierungen zu erfüllen, wurden Lebensmittel bisher überwiegend in Verpackungen aus Kunststoffen eingepackt.

Im Hinblick auf die mit der Verwendung von Kunststoffen zur Verpackung einher gehende Problematik der ungenügenden Recycelbarkeit, der Schadstoffbelastung bei der thermischen Verwertung und der schlechten Abbaubarkeit bestehen Bestrebungen Kunststoffe durch alternative Werkstoffe zu ersetzen. Dieses Bestreben ist insbesondere durch die aktuelle Diskussion von Kunststoffresten in den Weltmeeren und Mikroplastik in der Umwelt weiter gesteigert. Daher wurde in der Vergangenheit versucht, Verpackungen für Lebensmittel aus Papier herzustellen. Um die oben genannten Anforderungen hinsichtlich der Barriereeigenschaften erfüllen zu können, wurden die Papiere beschichtet. Die dabei entstehenden Papierlaminate sind jedoch in der Regel nur schlecht recycelbar, da die Barriereschichten das Trägerpapier derart abschirmen, dass die Zellulosefasern des Papiers während des Recyclingprozesses nur schlecht zugänglich sind. Der Recyclingprozess muss daher unter erhöhtem Aufwand betrieben werden, was jedoch das Bestreben der Ressourcenschonung konterkariert. Bei den üblichen Bedingungen des Recyclingprozesses verbleiben derartige Papierlaminate daher als großformatige Reststoffe. Die Suspension der im Papierlaminat enthaltenen Zellulosefasern in die Pulpe ist - wenn überhaupt - nur begrenzt möglich.

Es besteht daher ein Bedarf an papierhaltigen Laminaten, die die Anforderungen aus der Lebensmittelindustrie hinsichtlich der Eigenschaften als Verpackungsmaterial erfüllen. Andererseits sollten derartige papierhaltige Laminate jedoch recycelbar sein und insbesondere derart resuspendierbar sein, dass die enthaltenen Zellulosefasern in die Pulpe übergehen.

Weiterhin besteht der Bedarf an einem Verfahren zur Herstellung eines solchen Papierlaminats.

Außerdem sind papierhaltige Laminat-basierte Verpackungen erwünscht, die sich mit bestehenden Prozessen und Anlagen recyceln lassen.

Diese Aufgaben werden durch die Gegenstände der unabhängigen Patentansprüche gelöst.

Ein erfindungsgemäßes papierhaltiges Laminat, insbesondere papierhaltiges Laminat für Lebensmittelbehältnisse, umfasst ein Trägerpapier und eine an dem Trägerpapier zumindest einseitig mittelbar angeordnete erste Beschichtung. Diese erste Beschichtung muss nicht zwangsläufig direkt auf dem Trägerpapier angeordnet sein, wobei dies jedoch bevorzugt ist. Es wäre denkbar, dass zwischen dem Trägerpapier und der ersten Beschichtung eine Zwischenlage angeordnet ist, beispielsweise ein Druck, welcher durch eine transparente erste Beschichtung überdeckt ist.

Erfindungsgemäß ist vorgesehen, dass die erste Beschichtung ausgewählt ist aus einer Gruppe, die Lack, Heißsiegellack, Druckfarbe, Tinte, Metallisierungsschicht, Fettsperre, Siegelschicht, Kleber, Leim, Polymerfolie, insbesondere wasserlösliche Polymerfolie, Kunstharz, Aluminiumoxid-enthaltende Schicht und/oder Siliziumoxid-enthaltende Schicht umfasst. Dadurch ist es möglich, die Seite des papierhaltigen Laminats, auf der diese erste Beschichtung auf dem Trägerpapier angeordnet ist, äußerst vielfältig zu gestalten. Beispielsweise können auf dieser Seite bei der Verwendung eines solchen Laminats als Verpackung Informationen über den Verpackungsinhalt angegeben sein. Weiterhin kann das papierhaltige Laminat auf dieser Seite mit bestimmten Eigenschaften ausgerüstet werden, die - bei Verwendung als Verpackung - den Inhalt vor bestimmten Substanzen oder Strahlen schützen. Beispielsweise kann so verhindert werden, dass Fette durch das Laminat nach außen diffundieren und eine wie oben beschriebene Kennzeichnung des Inhalts oder eine grafische Ausgestaltung der Verpackung (beispielsweise unter Angabe einer Marke) beschädigen. Somit kann das papierhaltige Laminat beziehungsweise die Verpackung für lange Zeit ein optisch ansprechendes Erscheinungsbild behalten.

Als papierhaltiges Laminat, im Folgenden auch synonym als "Papierlaminat" bezeichnet, wird im Rahmen dieser Erfindung ein mehrlagiges System verstanden, welches mindestens eine papierhaltige Lage umfasst. Nicht jede dieser Lagen muss papierhaltig sein, wobei jedoch mehrere Lagen papierhaltig sein können. Wie in Laminaten üblich müssen die einzelnen Lagen einzeln nicht stabil und/oder selbsttragend sein. Vielmehr können einzelne Lagen durch Materialien gebildet sein, die zumindest unter bestimmten Bedingungen eine gewünschte Flexibilität aufweisen. Beispiele für derartige Lagen sind eine Siegelschicht, ein Kleber oder ein Leim.

Insbesondere in Verpackungen ist vorgesehen, dass - zumindest abschnittsweise - verschiedene Abschnitte eines einzigen papierhaltigen Laminats oder mehrerer papierhaltigen Laminate miteinander unter Ausbildung der Verpackung verbunden werden. Beispielsweise können Abschnitte des papierhaltigen Laminats zum Verschließen der Verpackung miteinander verklebt oder gegeneinander gesiegelt werden. In einer solchen Anordnung wird lokal ein papierhaltiges Laminat ausgebildet, welches mehrere papierhaltige Lagen aufweist. Von der Erfindung eingeschlossen sind jedoch bevorzugt auch derartige papierhaltige Laminate, welche auch vor der Ausbildung einer Verpackung bereits mehrere papierhaltige Lagen aufweisen. Beispielsweise könnte bereits der als "Trägerpapier" bezeichnete Kern des papierhaltigen Laminats ein Verbund mehrere Papierlagen sein.

Durch die oben beschriebenen Materialien gewährleistet werden, dass die - bei Verwendung des papierhaltigen Laminats als Verpackung - der Verpackungsinhalt durch schädliche Substanzen in der Haltbarkeit verringert wird. Beispielsweise könnte der Eintritt von Sauerstoff (beispielsweise in eine in der Verpackung eingerichtete Inertgasatmosphäre (beispielsweise Stickstoff oder CO₂)) verhindert werden. Ebenfalls wäre eine Barriere für Wasser und/oder Luftfeuchtigkeit denkbar, um einen Verpackungsinhalt lange knusprig zu halten.

Weiterhin ist vorgesehen, dass an dem Trägerpapier auf der der ersten Beschichtung gegenüberliegenden Seite eine zweite Beschichtung unmittelbar angeordnet ist. Diese zweite Beschichtung ist unmittelbar auf dem Trägerpapier angeordnet. Dies ermöglicht beim Recycling, dass nach Entfernung dieser zweiten Beschichtung das Trägerpapier beispielsweise für Wasser zugänglich wird und Zellulosefasern suspendiert werden können.

Wesentlich für die vorliegende Erfindung ist weiterhin, dass die zweite Beschichtung wasserlöslich und/oder wasserdegradierbar ist. Diese Eigenschaft ermöglicht in Verbindung mit der oben erwähnten unmittelbaren Anordnung der zweiten Beschichtung auf dem Trägerpapier, dass sobald die zweite Beschichtung durch Wasser zumindest abschnittsweise gelöst oder degradiert wurde, dass das Wasser direkt das Trägerpapier benetzen kann und (gegebenenfalls in Verbindung mit mechanisch eingebrachter Energie) Zellulosefasern aus dem Trägerpapier suspendieren kann. Somit stehen diese Fasern wieder für einen Recyclingprozess zur Verfügung.

Dadurch, dass die Zellulosefasern aus dem Trägerpapier durch einen Angriff von der Seite, auf der ursprünglich die zweite Beschichtung angeordnet war, in Suspension gebracht werden können, ist es möglich, das Trägerpapier soweit abzubauen, dass dessen Struktur zusammenbricht. Spätestens sobald dies eintritt, kann ist vorzugsweise auch die Stabilität der ersten Beschichtung so weit reduziert, dass dessen Struktur ebenfalls zusammenbricht. Unabhängig davon wird nach Resuspension der Zellulosefasern aus dem Trägerpapier (beispielsweise in eine Pulpe) die Abtrennung der ersten Beschichtung ermöglicht. Dies könnte bei größeren zusammenhängenden Stücken der ersten Beschichtung beispielsweise durch Siebe erfolgen. Bevorzugt ist jedoch, dass Reste der ersten Beschichtung zusammen mit anderen Verunreinigungen der Zellulosefasern (beispielsweise Tinte, Druckerschwärze oder Pigmente) durch Flotation aus der Pulpe entfernt beziehungsweise von den Zellulosefasern getrennt werden können.

Ein derartiges Laminat bietet neben der verbesserten Recyclingfähigkeit insbesondere Vorteile hinsichtlich einer hohen Durchstoßfestigkeit, Biegesteifigkeit, Zugsteifigkeit, Berstdruckfestigkeit, Bruchdehnung, Knickrissfestigkeit, Reißfestigkeit und/oder der Rückfederungskraft (gegenüber Karton).

Bevorzugt ist die zweite Beschichtung ein Leim, ein Kleber und/oder eine Siegelschicht. Es sind einige Leime oder Kleber und Siegelschichten bekannt, die wasserlöslich und/oder wasserdegradierbar sind. Vorteilhaft ist bei der Ausgestaltung der zweiten Beschichtung als Leim, Kleber oder Siegelschicht, dass diese Schicht unmittelbar zur Herstellung einer geschlossenen Verpackung verwendet werden kann. Beispielsweise könnte eine Klebeschicht auf andere Bereiche der Verpackung geklebt werden, um beispielsweise einen Beutel zu formen. Denkbar wäre auch, ein solches papierhaltiges Laminat über die zweite Beschichtung mit einem Kunststoffbehältnis zu verbinden, um eine im Kunststoffbehältnis vorhandene Öffnung zu verschließen und dieses somit zu schließen.

Als besonders geeignet haben sich als zweite Beschichtung Materialien erwiesen, die ausgewählt sind aus einer Gruppe, die Biopolymere, Casein, Stärke, thermoplastische Stärke, Zucker, Casein, Zellulose, Zellulosederivate, Carboxymethylzellulose, Zelluloseether, Xanthan, Carrageenan, Pectin, Guaran, Chitinderivate, Chitosanderivate (insbesondere N-carboxymethylchitosan), Dextran, Gluten, Hyaluronsäure, Polyhydroxyalkanoatbasiertes wasserlösliches und/oder wasserdegradierbares Polymer, Polyacrylsäure, hydrophiles Polyacrylat, Polyacrylamid (insbesondere N-(2-Hydroxypropyl)-methacrylamid), Polymethacrylsäure, Polysulfonsäure, Polyamin, Aminoharz, Polyimin, Polybetain, Polyethylenoxid, Polyethylenglycol, Polyvinylpyrrolidon (insbesondere Poly-N-vinylpyrrolidon), Polyvinylalkohol, Butenediol-Vinylalkohol-Co-polymer (BVOH), Polyacrylsäureesther, Polymethacrylsäureesther, Polybutylensucczinad (PBS), Polylactad (PLA), azetalisierter Polyvinylalkohol, Polyvinylalkohol-Copolymere, Polyvinylazetal, Polyester, Polyethylenimin, quartäre Ammoniumverbindungen, Polyoxazolin, Polyphosphat, Carboxypolymethylen, Polyvinylmethylether, Maleiinsäureanhydrid und Polyacrylamid jeweils einzeln, als Mischung und/oder als Copolymere umfasst. Diese Materialien sind - zumindest in einigen Ausführungen und/oder Kombinationen - wasserlöslich und/oder durch Wasser spalt- oder abbaubar (im Rahmen dieser Erfindung auch als "wasserdegradierbar" bezeichnet). Weiterhin könnte die Wasserlöslichkeit durch die Zugabe von Emulgatoren (beispielsweise auf die Lackrezeptur) verbessert werden. Auch ist der chemische Einbau von (hydrophilen) selbstemulgierenden funktionalen Gruppen ins Copolymer bevorzugt, da auch dadurch die Wasserlöslichkeit verbessert werden kann. Biopolymere, besonders bevorzugt Casein, Stärke, dabei insbesondere bevorzugt thermoplastische Stärke, Zellulose, Gelatine, Proteine, dabei insbesondere bevorzugt Sojaproteine und/oder Gluten, sind im Hinblick auf eine möglichst umfassende Ressourcenschonung im Produkt, dessen Herstellung und dessen Recycling bevorzugt. Außerdem sind diese Materialien frei verfügbar und lassen sich einfach in ein papierhaltiges Laminat integrieren.

Neben den oben genannten Polymeren als einzelne Komponente ist insbesondere die Verwendung von Copolymeren denkbar und bevorzugt. Copolymere von zwei oder mehr der oben genannten Polymere sind durch die in den Monomerbausteinen enthaltenen funktionellen Gruppen hydrophil, was die Wasserlöslichkeit begünstigt. Außerdem können im Copolymer weitere Eigenschaften derart eingestellt werden, dass diese den Anforderungen aus der Verpackungsindustrie beispielsweise im Hinblick auf die Klebekraft oder die Barriereeigenschaft genügt. Denkbar und vorteilhaft wäre auch, das Vorsehen von Sollbruchstellen im Polymer. Beispielsweise könnten hydrolyselabile Gruppen im Polymer dessen Degradation fördern. Kleinere Fragmente könnten zusammen mit dem Lösungsmittel (beispielsweise Wasser) von den Zellulosefasern abgetrennt werden.

Bevorzugt weist das papierhaltiges Laminat eine Stärke im Bereich von 10 - 500 µm, bevorzugt 20 - 300 µm, besonders bevorzugt 30 - 200 µm auf. Diese Stärken haben sich als vorteilhaft gezeigt, da sie einerseits ein ausreichend starkes Trägerpapier und dessen beidseitige Beschichtung (mit mindestens erster und zweiter Beschichtung) ermöglichen und andererseits dünn genug sind, um mit in der Verpackungsindustrie üblichen Verarbeitungsmaschinen gehandhabt werden zu können. Das Gewicht von papierhaltigen Laminaten in dem oben genannten Stärkebereich ist gering, so dass beim Transport von mit einem solchen papierhaltigen Laminat verpackten Produkt nicht unverhältnismäßig hohe Transportkosten anfallen.

In einer bevorzugten Ausführungsform umfasst das Papierlaminat mindestens eine Schicht, welche ausgewählt ist aus einer Gruppe, die Feuchtigkeitsbarriere, Sauerstoffbarriere, Gasbarriere, Mineralölsperre, Aromasperre, UV-Barriere, Lichtbarriere, Fettdiffusionsbarriere, Fettsiegelschicht, Dichtungsschicht und Klebeschicht umfasst. Durch eine derartige Schicht kann das Papierlaminat auf die jeweiligen Anforderungen an das Produkt, insbesondere in der Verpackungsindustrie, eingestellt werden.

Bei der Druckfarbe handelt es sich bevorzugt um eine Farbzusammensetzung, die Nitrocellulose, PVB, PVC und/oder PUR umfasst. derartige Farbzusammensetzungen haben sich als besonders geeignet erwiesen, um im Tiefdruckverfahren aufgebracht werden zu können. Unabhängig von der verwendeten Farbzusammensetzung ist das Tiefdruckverfahren zum Aufbringen einer Farbzusammensetzung bevorzugt, da es ein besonders homogenes Druckbild ergibt und verfahrensseitig besonders schnell, effizient und kostengünstig realisierbar ist. Alternativ oder ergänzend zum Tiefdruck können jedoch im Rahmen der Erfindung auch andere Drucktechniken zum Aufbringen von (Farb-) Schichten eingesetzt werden. Denkbar und für einige Anwendungen und Verfahren bevorzugt sind beispielsweise Flexodruck, Offsetdruck, UV-Flexodruck, EB-Flexodruck (wetflex), Bogenoffsetdruck, UV/EB Offsetdruck und/oder Digitaldruck. Für diese Druckverfahren sind gegebenenfalls andere als die oben als bevorzugt erwähnten Druckfarben vorteilhaft.

Bevorzugt ist ein papierhaltiges Laminat bei welchem das Trägerpapier eine Stärke (Dicke) im Bereich von 20 µm - 200 µm, bevorzugt 40 µm - 150 µm aufweist. In Abhängigkeit von den übrigen Eigenschaften des Trägerpapiers (beispielsweise Reißfestigkeit, Flächengewicht, Opazität, Haptik, Füllstoffart und/oder Füllstoffanteil) weist ein solches Trägerpapier eine ausreichende Reißfestigkeit und zur Verwendung in der Verpackungsindustrie auf, ist aber andererseits ausreichend dünn und leicht, um bei der Verwendung als Verpackung weder viel Volumen beizusteuern, noch das (Transport-) Gewicht unverhältnismäßig zu erhöhen.

Bevorzugt ist das Trägerpapier ausgewählt aus einer Gruppe, ohne sich auf diese zu beschränken, die Kraftpapier, Graspapier, Strohpapier, Hanfpapier, holzfreies Papier, Seidenpapier, Buntpapier, Dickdruckpapier, Tiefdruckpapier, Dokumentenpapier, Duplexpapier, Recyclingpapier, Butterbrotpapier, Pergamentpapier, Pergamin, Tauen, Velinpapier, Transparentpapier und aus Mikro- oder Nanozellulose umfassendes Papier umfasst. Es hat sich gezeigt, dass diese Papiere besonders geeignet sind, um in einem Laminat eine Stabile Verbindung zu benachbarten Schichten zu ermöglichen, deren Zellulosefasern aber dennoch im Recyclingprozess besonders leicht resuspendierbar sind.

Optional, und für einige Anwendungen bevorzugt, weist das Trägerpapier und/oder mindestens eine weitere Papierschicht einen Strich auf. Es handelt sich somit um ein gestrichenes Papier. Als Streichfarbe sind Kreide-, Kaolin-, Stärke - oder Kasein-enthaltende Streichfarben bevorzugt. Bevorzugt wird der Strich durch Kalandrieren auf das Trägerpapier aufgebracht.

Bei der ersten Beschichtung handelt es sich bevorzugt um einen Heißsiegellack. Bevorzugt ist dieser Ausgewählt aus einer Gruppe, die PVDC-Lack, EAA-Lack, EMA-Lack, EVA-Lack, lonomer-Lack, Acryl-Lack, Styrol-Acryl-Lack und Polyolefin-Copolymer-Lack, (insbesondere bevorzugt Styrol-Butadien-Copolymer-Lack, Polyvinylacetat-Lack, oder Mischungen hieraus, umfasst. Vorteilhaft ist, dass diese als wässrige Dispersion auftragbar sind.

Bevorzugt handelt es sich bei der ersten Beschichtung um einen Barrierelack. Bevorzugt ist dieser Ausgewählt aus einer Gruppe, die PVDC-Lack, PVOH-Lack PVOH-Copolymer-Lack, PVOH-basierter Lack, Polyurethan-Lack und Acrylat-basierter Lack umfasst. Diese Lacke sind aufgrund ihrer Barriereeigenschaften und der leichten Verarbeitbarkeit bevorzugt. Falls notwendig, ist bevorzugt, dass der Barrierelack anorganische Füllstoffe zur Erhöhung der Barrierewirkung umfasst. Entsprechende Füllstoffe sind dem Fachmann aus dem Stand der Technik ausreichend bekannt. Bevorzugt kann auch Nanozellulose dazu verwendet werden. Alternativ oder ergänzend dazu können Aluminiumoxide und oder Siliziumoxid per Dampfabscheidung als separate Schicht aufgebracht werden. Die Schichtdicke liegt für diese Oxide bevorzugt bei 0,01 µm - 0,5 µm. Alternativ oder ergänzend dazu ist für einige Ausführungsformen auch die Abscheidung eines Metalls bevorzugt. Sind metallisierte Oberflächen gewünscht, ist die Abscheidung von Aluminium bevorzugt. Die Schichtdicke liegt für Aluminium bevorzugt bei 0,01 µm - 0,5 µm.

Eine weitere Lösung der oben dargestellten Aufgabe ist eine Verpackung, die ein wie oben beschriebenes papierhaltiges Laminat umfasst. Durch die Nutzung eines solchen papierhaltigen Laminats kann bei geringem Gewicht und guter Bedruckbarkeit sichergestellt werden, dass trotz der Barrierewirkung des Papierlaminats gegenüber unerwünschten Substanzen oder Strahlungen die Recyclingfähigkeit der Verpackung gewährleistet werden kann.

Um die oben erwähnte gute Bedruckbarkeit zu gewährleisten und die Verpackung für einen potentiellen Kunden optisch ansprechend gestalten zu können, ist bevorzugt, dass die zweite Beschichtung auf einer Innenseite der Verpackung angeordnet ist. Dadurch kann die erste Beschichtung auf der (bezüglich des Trägerpapiers) Außenseite angeordnet sein. Die erste Beschichtung kann das Erscheinungsbild und /oder die Haptik der Verpackung positiv beeinflussen. Dabei muss die erste Beschichtung nicht zwangsläufig die Äußerste Schicht der Verpackung sein, sondern könnte gegebenenfalls durch eine oder weitere Schichten (zumindest abschnittsweise) überlagert sein.

Bevorzugt handelt es sich bei einer wie oben beschriebenen Verpackung um eine Verpackung ausgewählt aus einer Gruppe, die Stickpack, Beutel, Twist-Verpackung, Standbeutel (Doypack), stabile Beutel, Kissenbeutel, Seitenfaltenbeutel, wiederverschließbarer Beutel (Flow-Wrap), Aufreiß-Verpackungen, Dreirandsiegelverpackung (3ss), Vierrandsiegelverpackung 4ss, Würfel, Deckel, Sichtverpackung, Flossenverpackung, Blister, und Verpackung für pharmazeutische Produkte umfasst.

Ein weiterer erfindungswesentlicher Aspekt betrifft ein Verfahren zur Herstellung eines papierhaltigen Laminats, welches sich durch die folgenden Schritte auszeichnet: Bereitstellen eines Trägerpapiers, Bereitstellen einer ersten Beschichtung, welche ausgewählt ist aus einer Gruppe, die Lack, Druckfarbe, Tinte, Fettsperre, Siegelschicht, Kleber, Leim, Polymerfolie, insbesondere wasserlösliche Polymerfolie und Kunstharz umfasst, Aufbringen der ersten Beschichtung auf eine Seite des Trägerpapiers, Bereitstellen einer wasserlöslichen zweiten Beschichtung, Aufbringen einer zweiten Beschichtung unmittelbar auf die der ersten Beschichtung gegenüberliegende Seite des Trägerpapiers. Durch dieses Verfahren ist es besonders einfach möglich, ein recyclingfähiges papierhaltiges Laminat herzustellen. Das Aufbringen der wasserlöslichen zweiten Beschichtung unmittelbar auf einer Seite des Trägerpapiers ermöglicht im Recyclingprozess das Ablösen dieser Beschichtung und das Resuspendieren von Zellstofffasern (in die Pulpe).
Da Aufbringen der Beschichtungen kann unabhängig voneinander durch geeignete Verfahren partiell oder vollflächig erfolgen. Als besonders geeignet hat sich das Aufdrucken der Beschichtung erwiesen. Hierbei haben sich Auftragsgewichte von 0,5 - 20 g/m², bevorzugt 0,8 - 10 g/m², besonders bevorzugt 1 - 8 g/m² als vorteilhaft erwiesen. Alternativ oder ergänzend zum Aufdrucken einer Schicht, könnte eine Schicht auch durch Extrusion aufgebracht werden. Eine weitere bevorzugte Variante besteht darin, die Schicht als Schmelze aufzubringen ("Hotmelt"). Die beiden letztgenannten Varianten haben sich insbesondere dann als vorteilhaft erwiesen, wenn höhere Auftragsgewichte gewünscht sind. Als besonders geeignet hat sich das Aufdrucken der Beschichtung durch Extrusion oder als Schmelze erwiesen, wenn Auftragsgewichte von 1 - 50 g/m², bevorzugt 2-30 g/m², besonders bevorzugt 3-20 g/m² gewünscht sind.

In einer bevorzugten Variante des Verfahrens umfasst das Verfahren zusätzlich den Schritt des Zusammenfügens von zumindest einem Abschnitt der zweiten Beschichtung unter Ausbildung einer partiellen oder vollflächigen Klebeverbindung mit anderen Abschnitten desselben papierhaltigen Laminats oder eines anderen Verpackungsmaterials zu einer Verpackung. Sofern die Klebeverbindung zwischen Abschnitten papierhaltigen Laminats erzeugt wird, kommt es lokal zur Überlagerung dieser Abschnitte des papierhaltigen Laminats. Bevorzugt wird so ein Papierlaminat erzeugt, dessen Anzahl papierhaltiger Lagen der Summe der papierhaltigen Lagen der einzelnen Abschnitte entspricht.

Die Ausbildung der Klebeverbindung kann - sofern die zweite Beschichtung ein Kleber oder Leim oder eine Siegelschicht ist - ohne zusätzliche adhäsive Materialien erfolgen. Alternativ dazu wäre auch das Einbringen eines Klebers oder eines Leims zur Ausbildung einer zumindest zeitweise stabilen Klebeverbindung zwischen den oben genannten Abschnitten vorteilhaft. Alternativ dazu ist in einigen Fällen auch vorteilhaft, dass die zweite Beschichtung thermisch und/oder chemisch aktivierbar ist und in dieser aktivierten Form zur Ausbildung der gewünschten, zumindest zeitweise stabilen Klebeverbindung zwischen den oben genannten Abschnitten geeignet ist.

Das Laminierverfahren kann je nach Art der gewünschten Verpackung ausgewählt werden. Bevorzugt ist das Aufbringen einer Schicht ausgewählt aus einer Gruppe von Verfahren, die Trockenkaschierung, Nasskaschierung, Thermokaschierung, Extrusionskaschierung, wasserbasierte Klebekaschierung, lösungsmittelbasierte Klebekaschierung und lösungsmittelfreie Klebekaschierung umfasst. Besonders bevorzugt ist jedoch eine Nasskaschierung, insbesondere eine wasserbasierende Klebekaschierung, da dabei die Verwendung von organischen Lösungsmitteln wie Ethylacetat vermieden werden kann. Dies ist insbesondere im Hinblick auf die Produktionskosten, die Arbeitssicherheit und die Entsorgung vorteilhaft. Gleichzeitig ist es bei einer wasserbasierenden Klebekaschierung möglich, die Eigenschaft der Wasserlöslichkeit durch die Wahl geeigneter Harze für diese Klebeschichten im Laminat einzustellen, so dass eine gute Verarbeitbarkeit mit üblichen Maschinen möglich ist.

In einer bevorzugten Ausführungsform des Papierlaminats umfasst dieses mehrere Lagen, die ein Papier oder ein wasserlösliches Polymer umfassen. In einer solchen Ausführungsform ist bevorzugt, eine der Papierlagen so auszuführen, dass Wasser durch sie hindurchtreten kann. Sie ist dazu bevorzugt auf einer Seite nicht beschichtet oder mit einer wasserlöslichen oder wasserdurchlässigen Schicht versehen. Auf der gegenüberliegenden Seite dieser Papierlage ist mit einem wasserlöslichen Klebstoff oder Leim eine weitere Papierlage fixiert. Durch die wasserlösliche Ausgestaltung der Klebeschicht kann gewährleistet werden, dass sich beim Kontakt mit Wasser beide Papierschichten voneinander lösen. Dadurch sind beide Papierlagen noch besser für Wasser zugänglich, so dass (beispielsweise bei üblichen Recyclingverfahren) Zellulosefasern besonders leicht herauslösbar und in die Pulpe überführbar sind.

Eine bevorzugte Ausführungsform zeichnet sich dadurch aus, dass zwischen zwei Schichten Farben als Rückseitendruck auf eine innere Oberflächenschicht einer Papierlage des Papierlaminats aufgedruckt sind. Insbesondere dann, wenn großflächige Drucke gewünscht sind, ist diese Ausgestaltung vorteilhaft, da so die Benetzung des Papiers und das Eindringen von Wasser in das Papier zum Herauslösen von Zellulosefasern während des Recyclings begünstigt wird. Vorzugsweise handelt es sich bei der rückseitig (bezüglich des Papierlaminats innenseitig) bedruckten Papierlage um ein Papier mit niedriger Opazität, hoher Transparenz und/oder Lichtdurchlässigkeit. Dadurch wird ermöglicht, dass ein Verbraucher das als Rückseitendruck auf diese Seite der Papierlage aufgebrachte Motiv auch von der gegenüberliegenden Seite dieser Papierlage durch diese hindurch wahrnehmen kann. Ein weiterer Vorteil dieser Ausführungsform ist, dass die Haptik des Laminats durch den Druck und die aufgebrachten Farben nicht (oder zumindest nicht wesentlich) ändert. Für den Verbraucher bleibt die Haptik des Papiers erhalten, was einen wertigen Charakter eines in einem solchen Laminat verpackten Produkts unterstreichen könnte.

Ist auf einer Seite des Papierlaminats (abschnittsweise) ein Kaltsiegellack (beispielsweise um diese Seite zum Formen einer Verpackung mit anderen Abschnitten zu verkleben) vorgesehen, ist bevorzugt die gegenüberliegende Seite des Papierlaminats mit einem Trennlack zu versehen. Der Trennlack sollte dabei zumindest dort angeordnet sein, wo diese Seite während der Herstellung oder der Weiterverarbeitung mit dem Kaltsiegellack in Kontakt kommen könnte. Dadurch kann das unerwünschte Anhaften dieser Abschnitte des Papierlaminats aneinander (beispielsweise bei der Konfektionierung als Rollen) vermieden werden. Bevorzugt handelt es sich bei dem Trennlack um einen auf einer Nitrocellulose/Polyamid-Harz-Kombination basierenden Trennlack. Dieser hat sich in einem Papierlaminat als besonders vorteilhaft hinsichtlich der Haftkraft und des Verhaltens im Recyclingprozess erwiesen.

Auch wenn es bevorzugt und verfahrensseitig besonders einfach realisierbar ist, ist es nicht zwingend notwendig, dass der Klebstoff oder Leim wasserlöslich ist. Wird ein nicht wasserlöslicher Klebstoff oder Leim verwendet, ist bevorzugt, dass dieser wasserdurchlässig ist und auf eine wasserlösliche zweite Beschichtung aufgebracht wird, um die Recyclingfähigkeit zu gewährleisten. Bei der zusätzlichen wasserlöslichen Beschichtung handelt es sich bevorzugt um einen Lack, der zwischen dem Klebstoff oder Leim und der Papieroberfläche unmittelbar auf letzter angeordnet ist.

Gemäß einer weiteren bevorzugten Ausgestaltung ist die wasserlösliche und/oder wasserdegradierbare zweite Beschichtung als eine vollflächige Beschichtung ausgebildet. Insbesondere ist deren Ausgestaltung als Folie bevorzugt. Die Ausgestaltung als Folie bietet den Vorteil, dass sie separat hergestellt werden kann und dann im Rahmen der Papierlaminatherstellung mit dem Papier verbunden werden kann. Auch eine Einbettung zwischen verschiedenen Schichten des papierhaltigen Laminats ist so einfach realisierbar. Bei der Ausgestaltung als eine gesonderte Folie sind Dicken im Bereich von 5 µm - 200 µm, bevorzugt 10 µm - 100 µm bevorzugt, da sie eine gute Handhabbarkeit und ausreichende Festigkeit bei geringem Materialeinsatz und geringen Kosten ermöglichen. Darüber hinaus ist bei diesen Foliendicken die für das Auflösen oder Degradieren benötigte Zeit gering, so dass die Trennung der Laminatschichten schnell erfolgt und das Resuspendieren der Zellulosefasern im üblichen Zeitrahmen des Recyclingprozesses erfolgen kann.

Alternativ zu der oben dargestellten Ausführung als separate kann in einer weiteren bevorzugten Ausgestaltung die wasserlösliche und/oder wasserdegradierbare zweite Beschichtung als Lack-, Leim-, Film- oder (Co-) Extrusionsbeschichtung ausgeführt sein. In dieser Ausführungsform ist auch die großflächige, weiter bevorzugt die vollflächige Beschichtung des Trägerpapiers bevorzugt, jedoch nicht zwingend erforderlich. Auch partielle Beschichtungen sind denkbar und bevorzugt, beispielsweise wenn lediglich eine lokale Verklebung gewünscht ist. Bevorzugt weist eine solche als Lack-, Leim-, Film- oder (Co-) Extrusionsbeschichtung ausgeführte wasserlösliche und/oder wasserdegradierbare zweite Beschichtung eine Dicke von vorzugsweise 0,2 - 100 µm, bevorzugt 0,5 - 50 µm, besonders bevorzugt 1 - 10 µm auf. Bevorzugt wird eine solche Beschichtung im Rahmen der Herstellung des Laminats auf das Trägerpapier vor dessen Weiterverarbeitung aufgebracht. Als dafür bevorzugt geeignete Verfahren sind ausgewählt aus einer Gruppe, die Kaschieren, Lackieren, Flexodruck, Siebdruck, Tiefdruck und insbesondere bevorzugt Lackieren mittels einer Breitschlitzdüse ("curtain coating") oder eines Walzenauftragsverfahrens umfasst. Diese Verfahren ermöglichen besonders dünne zweite Beschichtungen, so dass das Auflösen oder Degradieren dieser Schicht im Laminat besonders schnell erfolgt. Die für das schnelle Resuspendieren der Zellulosefasern im Rahmen des Recyclingprozesses notwendige Trennung der Laminatschichten erfolgt daher ebenfalls äußerst schnell.

Durch die Auswahl eines Papiers und/oder der Beschichtungen ist es möglich, die sowohl die mechanischen als auch die Barriereeigenschaften des Papierlaminats einzustellen. Durch die Variabilität bei der Auswahl unterschiedlicher Schichtkombinationen lassen sich gegenüber einem einlagigen oder einer Folie oder einem Folienverbund bei gleicher Dicke Papierlaminate höherer Stärke, Reißfestigkeit, Reißdehnung, besserer Bedruckbarkeit und/oder geringerem Gewicht realisieren. Die mechanischen Eigenschaften des Papierlaminats können durch die Kombination verschiedener Papiersorten und/oder Beschichtungen an die jeweiligen Bedürfnisse im Rahmen der Verwendung als Verpackung (beispielsweise hinsichtlich des Formats oder der Bearbeitbarkeit) angepasst werden.

Bevorzugt ist bei der Verwendung einer PVA-Beschichtung zum Aufbau des Papierlaminats, dass die PVA-Beschichtung auch als Siegelschicht fungiert, die durch ein Heißsiegel- oder Wasserversiegelungsverfahren gegen sich selbst versiegelt werden kann. Weiterer Vorteil einer solchen PVA-Schicht ist, dass sie das Papierlaminat (in Abhängigkeit von ihrem Feuchtigkeitsgehalt) weicher macht, wohingegen die Papierschicht (in Abhängigkeit von dessen Auswahl) dem Papierlaminat eine hohe Steifigkeit verleihen kann. Denkbar wäre beispielsweise der Einsatz eine Trägerpapiers mit hoher Konzentration an Langfasern wodurch eine erhöhte mechanische Festigkeit erreicht werden könnte. Eine weitere Schicht könnte ein Papier mit hoher Konzentration an Kurzfasern sein, wodurch dieses besonders glatt ausgebildet sein kann. Diese Schicht wäre besonders gut bedruckbar und würde eine besonders angenehme Haptik aufweisen. Weiterhin wäre denkbar und bevorzugt, dass das Papier einen Papierstrich aufweist. Zur Verbesserung der Barriereeigenschaften des Papierlaminats, beispielsweise gegenüber Fett, ist bevorzugt, das Trägerpapier und/oder eine weitere Papierschicht unabhängig voneinander aus einer Gruppe von Papieren auszuwählen, die einen hohen KIT-Wert (also eine hohe Fettdichtigkeit bzw. Fat Penetration Resistance) aufweisen.

Beispielhafte Papierlaminate sind im Folgenden beschrieben. Diese Zusammensetzungen stellen jedoch lediglich Beispiele dar, ohne die Erfindung auf diese Ausführungsformen zu beschränken.

### 1. Heißsiegelfähiges Laminat mit einer einzigen Papierart

### Schichtfolge:

a) Kraftpapier, Flächengewicht > 40 g/m²,
b) wasserlöslicher Leim,
c) Kraftpapier, Flächengewicht > 40 g/m²,
d) Optionale Schicht(en) ausgewählt aus:
   Papierstrich, Flächengewicht > 2 g/m²,
   Barrierelack, Flächengewicht > 1 g/m²,
   Metallisierung, und
   Aluminiumdioxid- und/oder Siliziumdioxid-enthaltende Schicht (Partikelgröße (d₅₀, Sedigraph) > 0.01 µm),
e) Heißsiegellack, Flächengewicht > 3 g/m².

Die Schichten b) und c) können sich in diesem Laminat beliebig oft wiederholen, beispielsweise um dem Papierlaminat eine höhere Festigkeit zu verleihen. Es ist auch möglich, zusätzlich Heißsiegellack lediglich abschnittsweise auf die äußere Laminatoberfläche aufzubringen, um beispielsweise eine Linien- oder Punktversiegelung einer Verpackung innen-außen und/oder außen-außen zu ermöglichen. Anstelle des Heißsiegellacks könnte auch eine Heißsiegelbeschichtung mit einer Dicke von mehr als 5 µm verwendet werden. Falls die Kaltsiegelfähigkeit der Siegelschicht gewünscht ist, könnte der lediglich abschnittsweise aufgebrachte Heißsiegellack durch einen abschnittsweise aufgebrachten Kaltsiegellack, beispielsweise mit einer Dicke von mehr als 3 µm ersetzt werden.

Sollten die Barriereeigenschaften des Heißsiegellacks nicht ausreichen, können zusätzliche Barriereschichten in das Papierlaminat integriert werden. Denkbar sind diesbezüglich ein oder mehrere Stapel gleicher Barriereschichten oder eine Vielzahl separater gleicher Barriereschichten. Weiterhin ist für einige Anwendungen bevorzugt, mehrere verschiedene Barriereschichten in ein Papierlaminat zu integrieren. Diese können ebenfalls als ein oder mehrere Stapel oder als separate Barriereschichten vorliegen. Vorteilhaft ist beispielsweise ein Papierlaminat, mit einer Aluminium-Metallisierungsschicht und einer oder mehrerer Barrierelackschichten zur Unter- und/oder Überschichtung der Aluminium-Metallisierungsschicht. Die Anordnung der Barriereschichten im Laminat kann weitgehend beliebig sein, jedoch sollten, um die Resuspensierbarkeit der Zellulosefasern beim Recycling nicht zu beeinträchtigen, alle wasserunlöslichen Barriereschichten so angeordnet sein, dass die Papierlagen weiterhin mit Wasser in Kontakt bringbar sind. Bei wasserlöslichen Barriereschichten (wie beispielsweise PVOH-basierten Barrierelacken) besteht diese Einschränkung nicht. Dennoch hat es sich als vorteilhaft erwiesen, diese gemeinsam mit nicht-wasserlöslichen Beschichtungen in die Laminatstruktur zu integrieren, da dadurch die Resuspension der Zellulosefasern während des Recyclings weiter verbessert werden kann.

Als wasserlöslicher Leim wird ein Leim auf Basis von Stärke, Zucker, Kasein, Polyvinylacetat bevorzugt. Sollten nicht wasserlösliche oder wasserdegradierbare Leime oder Kleber verwendet werden, muss eine zusätzliche wasserlösliche Schicht, beispielsweise ein PVOH-Lack, unter dem Leim angeordnet sein, um die Delaminierung und damit auch die Resuspension der Zellulosefasern während des Recyclings zu gewährleisten.

### 2. Heißsiegelfähiges Laminat mit Bedruckung

### Schichtfolge:

a) Optionaler Decklack, Flächengewicht > 1 g/m²,
b) Druckfarbe,
c) Kraftpapier, Flächengewicht > 40 g/m²,
d) wasserlöslicher Leim,
e) Kraftpapier, Flächengewicht > 40 g/m²,
f) Optionale Schicht(en) ausgewählt aus:
   Papierstrich, Flächengewicht > 2 g/m²,
   Barrierelack, Flächengewicht > 1 g/m²,
   Metallisierung, und
   Aluminiumdioxid- und/oder Siliziumdioxid-enthaltende Schicht (Partikelgröße > 0.01 µm),
g) Heißsiegellack > 3 g/m².

Der optionale Decklack gemäß a) kann auch dazu dienen, die Eigenschaften der Oberfläche hinsichtlich deren Mattigkeit, Glanz, Haptik oder verbesserter Reibung auf spezielle Anforderungen anzupassen. Bezüglich der Barriere- und Siegelschichten sind die oben bezüglich Ausführungsbeispiel 1 dargelegten Ausführungsbeispiele ebenfalls möglich und bevorzugt. Ebenso sind mehrere Wiederholungen der Schichten c) und d) im Papierlaminat gemäß Beispiel 2 möglich. Eine oder mehrere der Kraftpapierschichten kann/können auch durch andere Papiere, (beispielsweise Graspapier) oder durch andere wasserlösliche oder wasserdegradierbare Schichten ersetzt werden, wie beispielsweise eine PVA-Folie oder eine wasserabbaubare (Bio-)Polymerfolie.

### 3. Papierlaminat mit Rückseitendruck und Heißsiegellack

### Schichtfolge:

a) Pergamentpapier, Flächengewicht > 32 g/m²,
b) Primer oder Papierstrich, Flächengewicht > 1 g/m²,
c) Druckfarbe,
d) wasserlöslicher Leim,
e) Kraftpapier, Flächengewicht > 40 g/m²,
f) Optional Papierstrich, Flächengewicht > 5 g/m²,
g) Heißsiegellack, Flächengewicht > 3 g/m².

Das Pergamentpapier ist bevorzugt hochsatiniert, hochfettbeständig und/oder transparent.

### 4. Papierlaminat mit Rückseitendruck und Kaltsiegellack

### Schichtfolge:

a) Trennlack, Flächengewicht > 1 g/m²,
b) Wasserlöslicher Primer falls benötigt, Flächengewicht > 1 g/m²,
c) Pergaminpapier, Flächengewicht > 32 g/m²,
d) wasserlöslicher Leim,
e) Druckfarbe,
f) Optional Primer oder Papierstrich, Flächengewicht > 1 g/m²,
g) Kraftpapier, Flächengewicht > 40 g/m²,
h) Abschnittsweise Kaltsiegellack, Schichtdicke > 3 µm.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Papierhaltiges Laminat, insbesondere papierhaltiges Laminat für Lebensmittelbehältnisse, mit einem Trägerpapier und einer an dem Trägerpapier zumindest einseitig mittelbar angeordneten ersten Beschichtung und einer an dem Trägerpapier auf der der ersten Beschichtung gegenüberliegenden Seite unmittelbar angeordneten zweiten Beschichtung, wobei die erste Beschichtung ausgewählt ist aus einer Gruppe, die Lack, Heißsiegellack, Druckfarbe, Tinte, Metallisierungsschicht, Fettsperre, Siegelschicht, Kleber, Leim, Polymerfolie, insbesondere wasserlösliche Polymerfolie, Kunstharz, Aluminiumoxid-enthaltende Schicht, und/oder Siliziumoxid-enthaltende Schicht umfasst,
**dadurch gekennzeichnet, dass**
die zweite Beschichtung wasserlöslich und/oder wasserdegradierbar ist.

2. Papierhaltiges Laminat nach Anspruch 1,
**dadurch gekennzeichnet, dass**
die zweite Beschichtung ein Leim oder Kleber ist.

3. Papierhaltiges Laminat nach Anspruch 1 oder 2,
**dadurch gekennzeichnet, dass**
die zweite Beschichtung ausgewählt ist aus einer Gruppe, die Biopolymere, Casein, Stärke, thermoplastische Stärke, Zucker, Casein, Zellulose, Zellulosederivate, Carboxymethylzellulose, Zelluloseether, Xanthan, Carrageenan, Pectin, Guaran, Chitinderivate, Chitosanderivate (insbesondere N-carboxymethylchitosan), Dextran, Gluten, Hyaluronsäure, Polyhydroxyalkanoatbasiertes wasserlösliches und/oder wasserdegradierbares Polymer, Polyacrylsäure, hydrophiles Polyacrylat, Polyacrylamid (insbesondere N-(2-Hydroxypropyl)-methacrylamid), Polymethacrylsäure, Polysulfonsäure, Polyamin, Aminoharz, Polyimin, Polybetain, Polyethylenoxid, Polyethylenglycol, Polyvinylpyrrolidon (insbesondere Poly-N-vinylpyrrolidon), Polyvinylalkohol, Polyvinylalkhol-Copolymer, Butenediol-Vinylalkohol-Co-polymer (BVOH), Polyacrylsäureesther, Polymethacrylsäureesther, Polybutylensucczinad (PBS), Polylactad (PLA), azetalisierter Polyvinylalkohol, Polyvinylazetal, Polyester, Polyethylenimin, quartäre Ammoniumverbindungen, Polyoxazolin, Polyphosphat, Carboxypolymethylen, Polyvinylmethylether, Maleinsäureanhydrid und Polyacrylamid jeweils einzeln, als Mischung und/oder als Copolymere umfasst.

4. Papierhaltiges Laminat nach einem der vorangegangenen Ansprüche, **dadurch gekennzeichnet, dass** die zweite Beschichtung wasserunlöslich, jedoch wasserdurchlässig ist, wobei die zweite Beschichtung einen wasserlöslichen Lack umfasst.

5. Papierhaltiges Laminat nach einem der vorangegangenen Ansprüche,
**dadurch gekennzeichnet, dass**
das papierhaltige Laminat eine Stärke im Bereich von 10 - 500 µm, bevorzugt 20 - 300 µm, besonders bevorzugt 30 - 200 µm aufweist.

6. Papierhaltiges Laminat nach einem der vorangegangenen Ansprüche,
**dadurch gekennzeichnet, dass**
das papierhaltige Laminat mindestens eine Schicht umfasst, welche ausgewählt ist aus einer Gruppe, die Feuchtigkeitsbarriere, Sauerstoffbarriere, Gasbarriere, Mineralölsperre, Aromasperre, UV-Barriere, Lichtbarriere, Fettdiffusionsbarriere, Fettsiegelschicht, Dichtungsschicht und Klebeschicht umfasst.

7. Papierhaltiges Laminat nach einem der vorangegangenen Ansprüche,
**dadurch gekennzeichnet, dass** das Trägerpapier eine Stärke im Bereich von 1 µm - 500 µm, bevorzugt 5 µm - 200, besonders bevorzugt 10 µm - 100 aufweist.

8. Papierhaltiges Laminat nach einem der vorangegangenen Ansprüche, **dadurch gekennzeichnet, dass** das papierhaltige Laminat zumindest eine Schicht aus transluszentem Papier umfasst.

9. Verpackung,
**dadurch gekennzeichnet, dass**
sie ein Papierhaltiges Laminat nach einem der vorangegangenen Ansprüche umfasst.

10. Verpackung nach Anspruch 9,
**dadurch gekennzeichnet, dass**
die zweite Beschichtung auf einer Innenseite der Verpackung angeordnet ist.

11. Verfahren zur Herstellung eines papierhaltigen Laminats,
**gekennzeichnet durch** die Schritte:
- Bereitstellen eines Trägerpapiers,
- Bereitstellen einer ersten Beschichtung, welche ausgewählt ist aus einer Gruppe, die Lack, Druckfarbe, Tinte, Fettsperre, Siegelschicht, Kleber, Leim, wasserlösliche Polymerfolie und Kunstharz, umfasst,
- Aufbringen der ersten Beschichtung auf eine Seite des Trägerpapiers,
- Bereitstellen einer wasserlöslichen und/oder wasserdegradierbaren zweiten Beschichtung,
- Aufbringen einer zweiten Beschichtung unmittelbar auf die der ersten Beschichtung gegenüberliegende Seite des Trägerpapiers.

12. Verfahren zur Herstellung eines papierhaltigen Laminats nach dem vorangegangenen Anspruch,
**dadurch gekennzeichnet, dass**
zumindest Abschnitte der zweiten Beschichtung unter Ausbildung einer Klebeverbindung mit anderen Abschnitten desselben papierhaltigen Laminats oder eines anderen Verpackungsmaterials zu einer Verpackung zusammengefügt werden.
